Europäisches Patentamt

European Patent Office

Office européen des brevets

(19)

(11) EP 0 577 480 B1

(12) FASCICULE DE BREVET EUROPEEN

(45) Date de publication et mention
de la délivrance du brevet:
**19.02.1997 Bulletin 1997/08**

(51) Int Cl.6: **G01S 13/78**

(21) Numéro de dépôt: **93401637.9**

(22) Date de dépôt: **25.06.1993**

(54) **Procédé et dispositif de reconnaissance d'impulsions et utilisation pour le filtrage des réponses mode S d'un radar secondaire**

Verfahren und Vorrichtung zur Impulserkennung und zum Filtern der Mode-S-Antworten eines Sekundärradars

Procedure and device for impulse recognition and usage to filter mode S responses of an SSR

(84) Etats contractants désignés:
**DE FR GB IT**

(30) Priorité: **30.06.1992 FR 9208027**

(43) Date de publication de la demande:
**05.01.1994 Bulletin 1994/01**

(73) Titulaire: **THOMSON-CSF**
**75008 Paris (FR)**

(72) Inventeurs:
• **Billaud, Philippe**
 **F-92402 Courbevoie Cedex 08 (FR)**
• **de Volder, Claude**
 **F-92402 Courbevoie Cedex 08 (FR)**
• **Wybierala, Michel**
 **F-92402 Courbevoie Cedex 08 (FR)**

(74) Mandataire: **Benoit, Monique et al**
 **THOMSON-CSF-S.C.P.I.,**
 **13, Avenue du Président**
 **Salvador Allende**
 **94117 Arcueil Cédex (FR)**

(56) Documents cités:
 EP-A- 0 426 543       GB-A- 2 021 895
 US-A- 4 796 030

• ELECTRONICS & COMMUNICATION
 ENGINEERING JOURNAL vol. 2, no. 2, Avril 1990,
 London, GB, pp 53-59; TRIM: 'MODE S: AN
 INTRODUCTION AND OVERVIEW'

**Description**

La présente invention se situe dans le domaine du filtrage des réponses reçues par un récepteur secondaire de radar.

On sait que les radars peuvent être munis d'un dispositif appelé radar secondaire permettant d'obtenir de véhicules porteurs coopératifs, équipés de transpondeurs radars des informations codées sur l'identité du porteur et d'autres informations codées (altitude, signalisation de pannes radios, détresse...).

Les transpondeurs des véhicules porteurs émettent des réponses chaque fois qu'ils sont interrogés, et parfois, dans un mode de fonctionnement à adressage sélectif utilisable aussi à des fonctions d'anti-collision dit mode S, de façon spontanée. Chaque radar équipé d'un radar secondaire doit donc être doté de moyens lui permettant de reconnaître parmi toutes les réponses reçues, celles qui sont des réponses en mode S, de façon à pouvoir les éliminer pour ne retenir que les réponses dans d'autres modes et trier plus aisément dans ces dernières, les réponses à ses propres interrogations. De façon normalisée par l'Organisation de l'Aviation Civile Internationale (OACI) une réponse mode S est constituée d'un train d'impulsions émises sur une fréquence porteuse de 1090 MHz.

Chaque train d'impulsions comporte un préambule et un message.

Le préambule comporte quatre impulsions identiques d'une durée de 0,5 μs chacune. Les deux premières et les deux dernières impulsions sont séparées entre elles de 0,5 μs. La première et la troisième impulsion sont séparées entre elles de 3,5 μs.

Le message ou bloc de données peut être court ou long. Lorsqu'il est court, le message comporte 56 impulsions de 0,5 μs chacune, et 112 lorsqu'il est long. La modulation du message est effectuée par la position des impulsions qui peuvent être en début où en fin de créneaux de 1 μs.

Le premier de ces créneaux est situé à 8 μs derrière la première impulsion du préambule.

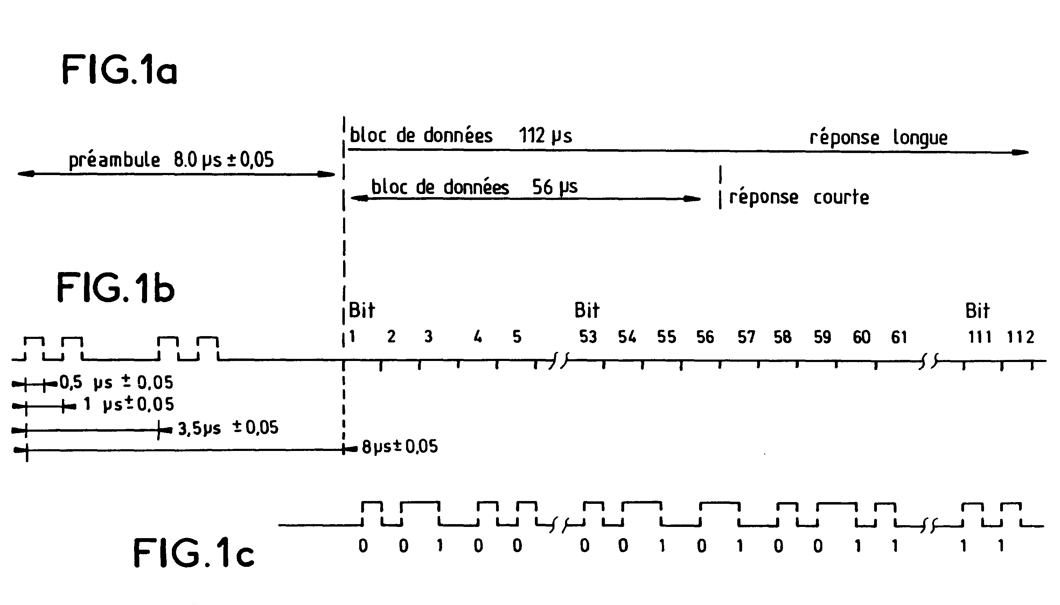

La définition de la norme est schématisée figure 1. Cette figure fait également apparaître les tolérances telles que définies par l'OACI.

La nécessité de filtrer les réponses mode S ne s'est pas encore fait sentir puisque l'interrogation à adressage sélectif n'est pas, à ce jour, opérationnelle. Cependant dès aujourd'hui, les appels d'offre d'extracteur de réponses de radars secondaires demandent une protection contre les réponses mode S car celles-ci sont de nature à induire de nombreuses fausses détections de réponses secondaires qui peuvent saturer l'extracteur.

Les circuits actuels effectuent :

- une détection des réponses mode S sur la présence des quatre impulsions du préambule ;
- une élimination de toutes les impulsions reçues pendant une durée supérieure à celle d'une réponse S longue.

Ce principe de détection est sujet à un fort taux de fausse alarme en présence de réponses secondaires "garblées" et ne précise pas la longueur de la réponse mode S détectée (64 μs ou 120 μs). Une réponse est dite "garblée" lorsqu'elle est mélangée à d'autres réponses au point que une ou plusieurs impulsions de la réponse ont des longueurs apparentes différentes de leurs longueurs réelles par suite du chevauchement des impulsions des différentes réponses. Le filtrage en tout ou rien diminue notablement la probabilité de détection des réponses secondaires car l'élimination n'est pas sélective.

La présente invention améliore la détection des réponses secondaires, diminue le nombre de fausses réponses détectées et évite la saturation de l'extracteur en présence de réponses provenant de transpondeur à adressage sélectif (mode S).

Elle permet la recherche et l'élimination sélective des impulsions appartenant à une réponse mode S et donc la conservation des réponses de radar secondaires reçues pendant le temps de la réponse mode S. L'invention concerne donc, d'une part un procédé et un dispositif de détection des réponses mode S, capable d'indiquer de quel type - court ou long - est la réponse et d'autre part un procédé et un dispositif d'élimination des impulsions appartenant à la réponse mode S. Pour que le second dispositif puisse jouer son rôle, éliminer les impulsions d'une réponse S, tout en conservant les impulsions de réponse de radar secondaire, il faut que la recherche soit effectuée dans des conditions où l'on sauvegarde l'ensemble de l'information reçue. L'invention est applicable chaque fois que l'on veut trier les impulsions d'un message ayant les caractéristiques d'une réponse S.

Elle se situe en aval d'un dispositif de numérisation de signaux vidéo reçus et d'un dispositif de détection des fronts montant des impulsions.

Les dispositifs élaborant les différents signaux vidéo sont en eux-même connus et ne seront pas décrits. Il s'agit notamment, en ce qui concerne l'invention, d'un signal appelé conventionnellement LOGΣ et représentatif de la puissance du signal reçu et d'un signal appelé conventionnellement Δ/Σ et représentatif de l'écart angulaire de l'origine du signal reçu par rapport à l'axe d'une antenne directive équipant le récepteur.

La présence éventuelle d'une réponse mode S est recherchée, à l'issue de chacune des périodes de temps déterminée par une horloge. Dans le mode de réalisation préféré cette période P est la même que la période d'échantillonnage utilisée pour la numérisation des signaux vidéo. La méthode de détection selon l'invention permet de déterminer si la réponse mode S détectée est une réponse courte (durée 64 μs) ou une réponse mode S longue (durée 120 μs).

Pour cela on mémorise dans un registre à entrée série et sorties parallèles les fronts montants d'impulsions. L'information contenue dans le registre est décalée à la cadence d'échantillonnage. Le registre a un nombre de cases supérieur au nombre obtenu par division de la durée d'une réponse mode S courte par la période P d'échantillonnage. De préférence le nombre de cases est tel qu'il permet de mémoriser le front montant de l'impulsion n° (56+c) d'une réponse mode S longue (c>0) alors que la première impulsion du préambule de cette réponse est encore présente dans le registre. Les sorties parallèles du registre sont connectées à deux corrélateurs composés classiquement de portes "et".

La corrélation a pour but de s'assurer de la présence simultanée des fronts montants des quatre impulsions du préambule, des b dernières impulsions d'une réponse mode S qui serait courte et des c premières impulsions d'une réponse mode S qui serait longue. En sortie des corrélateurs, on a donc une information quant à la présence d'une réponse mode S et à sa longueur. Il est donc possible d'adapter la suite du traitement de la réponse ainsi détectée, en particulier son filtrage, à la longueur de la réponse. Selon un mode de réalisation de l'invention le filtrage, c'est à dire l'élimination des impulsions des réponses mode S de façon à ne traiter que les autres réponses de radars secondaires est effectué en considérant non seulement la position temporelle de chacune des impulsions par rapport aux impulsions du préambule mais aussi son niveau de puissance déterminé par la valeur du signal LOGΣ et sa valeur d'écartométrie déterminée par la valeur du signal Δ/Σ.

Normalement toutes les impulsions qui appartiennent à une seule réponse sont au même niveau de puissance et ont une même valeur d'écartométrie.

Il est donc probable qu'une impulsion bien positionnée dans le temps mais qui a un niveau de puissance ou une valeur d'écartométrie différent de la moyenne des autres impulsions de la réponse, soit une impulsion appartenant à une autre réponse.

Pour établir la puissance moyenne de la réponse mode S, différents principes peuvent être employés du plus simple au plus sophistiqué :

- utilisation des impulsions du préambule uniquement ;
- utilisation des impulsions mode S détectées corrélant avec la référence établie sur les impulsions du préambule ;
- application du principe décrit par la demande de brevet français FR-A-2 654 217 "élaboration de la puissance d'une réponse mode S par analyse de l'histogramme des valeurs des impulsions possibles pendant la durée d'une réponse mode S", correspondant à la demande de brevet européen EP-A-0 426 543.

La puissance de chacune des impulsions bien positionnées dans le temps et ainsi susceptibles de constituer une partie de la réponse mode S est comparée au niveau de puissance moyen des impulsions établi préalablement. Si l'écart de puissance entre l'impulsion examinée et le niveau moyen est inférieur à un seuil préalablement fixé l'impulsion est considérée comme faisant partie de la réponse mode S. La valeur du seuil peut être adaptée pour tenir compte de la valeur moyenne établie. Plus la réponse est faible et plus elle est susceptible de variations importantes en raison de l'importance grandissante du bruit. On a par conséquent intérêt à augmenter la valeur du seuil de comparaison pour les puissances moyennes faibles. Cet ajustement du seuil pourra être réalisé par paliers successifs.

Pour établir la valeur moyenne de l'écartométrie, on utilise la valeur moyenne d'écartométrie des impulsions du préambule.

Là encore, il s'agit d'un choix, la valeur moyenne de l'écartométrie pourrait être établie par tout autre mode connu, en particulier par la méthode de l'histogramme décrite dans le brevet français n° 89.14416 appliquée à la grandeur d'écartométrie.

La valeur d'écartométrie de chaque impulsion qui de par sa position temporelle est susceptible d'appartenir à la réponse mode S, est comparée à la valeur moyenne établie sur les quatre premières impulsions. Si l'écart d'écartométrie de l'impulsion examinée, par rapport à l'écartométrie moyenne, est inférieur à un seuil préalablement fixé l'impulsion est considérée comme faisant partie de la réponse mode S.

La décision de rejet d'une impulsion, peut être prise uniquement en fonction des résultats de comparaison sur LOGΣ ou Δ/Σ. Elle peut également être effectuée cumulativement sur les deux critères et n'être dans ce cas retenue que si elle satisfait aux deux critères. Dans le mode de réalisation qui sera décrit plus loin, on utilise les deux critères cumulativement, sauf dans le cas où le niveau de LOGΣ devient inférieur à un seuil fixé auquel cas, on n'utilise que LOGE.

En généralisant, on peut dire que l'invention est relative à un procédé numérique de détection en temps réel de messages impulsionnels constitués selon une norme définissant les largeurs et positions relatives des différentes impulsions constituant le message, la norme statuant que le message peut être court, auquel cas il comporté un nombre (A+B) d'impulsions, ou long auquel cas il comporte (A+B+C) impulsions, caractérisé en ce que :

1) l'on mémorise en séquence selon une période P des signaux représentatifs de la présence ou de l'absence d'un front montant des diverses impulsions du message et ceci pendant un nombre de périodes P suffisant pour mémoriser au moins (A+B+1) impulsions du message, chaque front montant ayant à chaque instant une adresse dans une mémoire fonction de son instant d'arrivée ;

2) on vérifie la présence simultanée dans la mémoire d'un premier groupe d'impulsions qui de par les écarts relatifs de temps de leurs adresses sont susceptibles d'appartenir aux (A+B) premières impulsions mémorisées, cette présence simultanée entraînant la production d'un premier signal ayant la valeur (1) en cas de présence et la valeur (O) en cas d'absence, et simultanément on vérifie la présence simultanée d'un second groupe d'impulsions qui de par les écarts relatifs de temps de leurs adresses sont susceptibles d'appartenir à des impulsions du message, mémorisées après les (A+B) premières impulsions, cette présence entraînant la production d'un second signal ayant la valeur (1) en cas de présence et la valeur (O) en cas d'absence, le premier signal à (1) constituant une détection de message, le second signal à (O ou 1) caractérisant un message court ou long.

Elle est également relative à un dispositif permettant de réaliser le procédé c'est-à-dire un dispositif de détection en temps réel des impulsions appartenant à un message hyperfréquence constitué selon une norme statuant que le message peut être de façon aléatoire court ou long et comporte :

- un préambule constitué d'un nombre A d'impulsions dont les largeurs et les positions relatives sont fixées ainsi que leurs tolérances d'écart, par la norme ;
- un bloc de données constitué par des impulsions modulées en position dont les largeurs et les positions possibles compte tenu d'une modulation et des tolérances sont fixées par la norme, la norme statuant que chaque bloc de données peut être de façon aléatoire constitué de B impulsions auquel cas le message est dit court ou de (B+C) impulsions auquel cas le message est dit long, le dispositif étant inclus dans un récepteur de signaux hyperfréquence muni de moyens pour élaborer un signal numérique dit LE représentatif de la présence d'un front montant d'impulsion, de moyens pour élaborer d'autres grandeurs se rapportant aux signaux hyperfréquence reçus par le récepteur, et de moyens pour convertir ces grandeurs en signaux numériques, la numérisation étant effectuée par prise d'échantillons périodique de valeurs de ces grandeurs, la prise d'échantillons étant commandée par des signaux d'horloge de façon simultanée pour les signaux LE et pour les autres grandeurs, et la période ayant la valeur p, le dispositif étant caractérisé en ce qu'il comprend un registre à décalage à entrée série et sorties parallèles comportant un nombre de cases non inférieur au nombre de périodes P séparant le front montant de la première impulsion du préambule et le front montant de la première impulsion des C impulsions caractérisant une réponse longue dans lequel les signaux en sortie des moyens élaborant les signaux LE sont introduits en séquence sur commande des dits signaux d'horloge, et un premier et un second corrélateurs, et en ce que des premiers groupes de sorties de cases consécutives du registre sont branchées en parallèle pour alimenter des liaisons séries alimentant le premier corrélateur, des seconds groupes de sorties de cases consécutives de ce registre sont branchées en parallèle pour alimenter des liaisons séries qui alimentent elle-même des sommateurs chaque sortie de sommateur alimentant le premier corrélateur et en ce que des troisièmes groupes de sorties de cases consécutives du registre sont branchées en parallèle pour alimenter des liaisons séries qui alimentent elle-même des sommateurs, chaque sortie de sommateur alimentant le premier corrélateur et en ce que des troisièmes groupes de sorties de cases consécutives sont branchées en parallèle pour alimenter des liaisons séries qui alimentent elle-même des sommateurs, chaque sortie de sommateur alimentant le second corrélateur et en ce que les premier et second corrélateurs ne délivrent chacun un signal positif que sur présence d'un signal sur chacune de leurs alimentations.

Elle est relative également à un procédé numérique de reconnaissance d'impulsions susceptibles de par leurs positions temporelles d'appartenir à un message impulsionnel constitué selon une norme définissant les largeurs et positions relatives des différentes impulsions constituant le message, la norme statuant que le message peut être court auquel cas il comporte (A+B) impulsions ou long auquel cas il comporte (A+B+C) impulsions, procédé dans lequel :

a) on mémorise en séquence selon une période P, au moins une valeur de grandeurs $\alpha$ $\beta$ $\gamma$ mesurées préalablement sur chaque impulsion, chaque grandeur ayant à chaque instant une adresse dans une mémoire fonction de son instant d'arrivée ;

et caractérisé en ce que :

b) on détecte en séquence aux mêmes instants et selon la même période p la présence d'un message, la détection du message étant réalisée pour intervenir, par construction, à un temps connu par rapport à la première impulsion du message détecté, chaque détection provoquant le passage à 1 d'un premier signal initialement à 0 et le passage à 1 d'un second signal initialement à 0 si la réponse est longue ;

c) au reçu d'une valeur 1 pour le premier signal et de la valeur du second signal on établit sur plusieurs valeurs des grandeurs $\alpha$ $\beta$ $\gamma$ respectivement, stockées dans la mémoire qui de par leurs adresses ont des positions relatives correspondant à des impulsions du préambule du message détecté à l'étape b, des valeurs moyennes de référence $\bar{\alpha}$ $\bar{\beta}$ $\bar{\gamma}$ des différentes grandeurs ;

d) on détermine l'adresse de la valeur d'au moins une des grandeurs $\alpha$ $\beta$ $\gamma$ mesurées qui de par sa position par rapport au moment de la détection est l'adresse de la valeur α β γ de la première impulsion ;

e) on compare la valeur d'au moins une grandeurs α β γ pour la première impulsion à la valeur moyenne correspondante $\bar{\alpha}$ $\bar{\beta}$ $\bar{\gamma}$ ;

f) on reconnaît la première impulsion comme appartenant au message si aucune des comparaisons ne fait apparaître un écart, entre sa valeur et la valeur moyenne correspondante, supérieur à un seuil préalablement fixé pour chaque grandeur ;

g) on recommence les étapes d, e, f, pour chacune des impulsions suivantes, qui de par leurs positions sont susceptible d'appartenir à la réponse détectée, pendant le temps correspondant à un message court si le second signal à la valeur 0 et le temps d'un message long si le second signal à la valeur 1.

Elle est enfin relative à un dispositif de filtrage, destiné à appliquer le procédé ci-dessus, c'est à dire à un dispositif de reconnaissance en temps réel des impulsions appartenant à un message hyperfréquence, constitué selon une norme statuant que le message peut être de façon aléatoire court ou long et comporte un préambule constitué d'un nombre A d'impulsions dont les largeurs et les positions relatives sont fixées ainsi que leurs tolérances d'écart par la norme, un bloc de données constitué par des impulsions modulées en position, dont les largeurs et les positions possibles compte-tenu d'une modulation et des tolérances sont fixées par la norme, la norme statuant que chaque bloc de données peut être de façon aléatoire constitué de B impulsions auquel cas le message est dit court ou de (B+C) impulsions auquel cas le message est dit long, le dispositif étant inclus dans un récepteur de signaux hyperfréquence muni de moyens pour élaborer un signal numérique dit message d'impulsions, ce message étant établi à partir d'échantillons numériques prélevés selon une période P de grandeurs α β γ caractéristiques des signaux vidéo reçus par le récepteur, le message d'impulsions, comportant une information relative à la détection d'un front montant d'impulsions, dite LE, des informations dites sum représentatives de la somme des valeurs des échantillons de chaque grandeurs α β γ, affectés à l'impulsion représentée par LE, une information dite numsam relative au nombre d'échantillons de chaque grandeur affectés à l'impulsion représentée par le front montant LE, le dispositif étant caractérisé en ce qu'il comporte un moyen de détection d'arrivée du message, ce moyen recevant en séquence les informations LE et délivrant un signal MSR, si un message est détecté et un signal LMSR, si le message détecté est long, un moyen de calcul de la valeur moyenne $\overline{sum}$ de chaque grandeur sum, ce moyen recevant les grandeurs sum et la grandeur numsam du message d'impulsion, une première mémoire circulaire adressable de stockage, une seconde mémoire circulaire adressable dite de travail chacune recevant en séquence les valeurs moyennes $\overline{sum}$ des dites grandeurs sum, l'adresse de chaque valeur étant à chaque instant une fonction de son instant d'arrivée dans la mémoire, un moyen de calcul d'adresses mémoire et de séquencement qui au reçu des signaux MSR et LMSR détermine les adresses des dites valeurs $\overline{sum}$, un moyen de calcul d'une valeur moyenne $\overline{\overline{sum}}$ de chaque grandeur sélectionnée pour les impulsions du préambule, alimenté en séquence par les dites valeurs sélectionnées à partir de la mémoire de travail, et un organe de comparaison alimenté par ce moyen de calcul via une première série d'entrées, et qui reçoit sur une seconde série d'entrées et en séquence en provenance de la mémoire de stockage à partir de la fin du calcul des valeurs moyennes de référence $\overline{\overline{sum}}$, chacune des dites valeurs moyennes des grandeurs sélectionnées α β γ qui de par leurs adresses sont susceptibles d'appartenir à la réponse détecté, ledit organe de comparaison retenant comme impulsion appartenant à la réponse détecté les impulsions pour lesquelles la différence entre une valeur moyenne de la grandeur mesurée sur cette impulsion et la valeur moyenne de référence correspondante est inférieure à un seuil prédéterminé pour chacune des grandeurs sélectionnées.

Dans l'application selon l'invention, la norme est la norme définissant les réponses mode S. Dans cette application A=4, B=56 et C=56. Le premier groupe de sorties consécutives des cases du registre est constitué par des cases correspondant à la position que peuvent occuper les impulsions du préambule. Le second groupe correspond à des impulsions appartenant aux B impulsions que contient le message d'une réponse mode S courte, le troisième groupe de sorties consécutives du registre correspond à des impulsions appartenant aux C impulsions d'une réponse mode S longue. Une sortie de valeur 1 au premier corrélateur caractérise une détection de réponse mode S par la présence aux instants définis par la norme, d'impulsions du préambule et d'impulsions de la première partie du message correspondant aux B impulsions d'une réponse courte. Une sortie de valeur 0 à la sortie de ce premier corrélateur correspond à une absence de détection. Lorsque la sortie du premier corrélateur est à 1 et que la sortie du second est à 0, la réponse détectée est courte, elle est longue si la sortie du second corrélateur est également à 1.

Dans le mode de réalisation préféré de l'invention, le second groupe de sorties est constitué par les positions possibles des trois dernières impulsions d'une réponse mode S courte, le troisième groupe est constitué par les trois premières impulsions des C impulsions caractérisant une réponse mode S longue. Il a en effet été constaté par simulation qu'une détection sur trois impulsions supplémentaires d'une réponse mode S courte diminuait notablement la probabilité de fausse détection. Le choix des trois premières impulsions du groupe de C impulsion correspond à l'impératif de détecter que la réponse est longue le plus tôt possible, pour pouvoir commencer un traitement de ces réponses le plus tôt possible.

L'invention sera maintenant décrite en référence aux dessins annexés dans lesquels :

- la figure 1 représente les spécifications définies par l'OACI pour une réponse mode S ;
- la figure 2 représente les positions que peut avoir le front montant d'une impulsion d'une réponse mode S appartenant au bloc de données ;
- la figure 3 représente l'implantation de l'invention dans un extracteur de radar secondaire ;
- la figure 4 représente le mode de détection d'une réponse mode S ;
- la figure 5 représente un mode préféré de réalisation d'un module.
- les figures 6 et 7 illustrent les résultats du filtrage.

La figure 1 représente des spécifications définies par l'OACI pour une réponse Mode S. Elle se décompose en trois figures, les figures 1a, 1b et 1c.

La figure 1a représente la forme générale que prend une réponse mode S. Elle se décompose en un même préambule de 8 µs plus ou moins 0,05 µs, et d'un bloc de données qui peut être soit un bloc de données court de 56 µs ou un bloc de données long de 112 µs.

La figure 1b représente le préambule d'une part, et les bits de données du bloc réponse d'autre part. Le préambule comporte quatre impulsions, deux premières et deux secondes ; les deux premières impulsions ont une largeur de 0,5 µs ± 0,05 µs et elles sont espacées entres elles de 0,5 µs ; à 3,5 µs ± 0,05 µs de la première impulsion du premier bloc de deux impulsions se trouve un second bloc de deux impulsions identique au précédent. A 8 µs du front montant de la première impulsion du premier bloc viennent ensuite les bits de données du bloc de données. Ces bits sont au nombre de 56 ou de 112 selon que la réponse est courte ou longue.

La figure 1c fait apparaître le mode de reconnaissance des bits de données appartenant au bloc réponse. Ces bits de données sont constitués par des impulsions qui se situent chacune dans un intervalle de 1 µs. Chaque impulsion a une largeur de 0,5 µs ; elle est placée soit en tête de l'intervalle d'1 µs soit en fin de cet intervalle. Si elle est placée en tête, de façon conventionnelle l'impulsion représente un 1, elle représente un zéro dans le cas contraire. Ainsi une impulsion représentant un zéro suivie d'une impulsion représentant un 1, sera constituée d'une seule impulsion de 1 µs, alors qu'une impulsion représentant un 1 suivie d'une impulsion représentant un zéro se traduira par une absence de signal pendant 1 µs.

Dans la réalisation selon l'invention, on a choisi pour décider de la présence ou de l'absence de la réponse mode S de détecter d'une part les quatre impulsions du préambule, d'autre part les trois dernières impulsions de données d'une réponse mode S courte. En ce qui concerne les réponses mode S longues on a choisi de détecter les trois premières impulsions qui suivent la 56ème, la 56ème étant la dernière impulsion d'une réponse mode S courte.

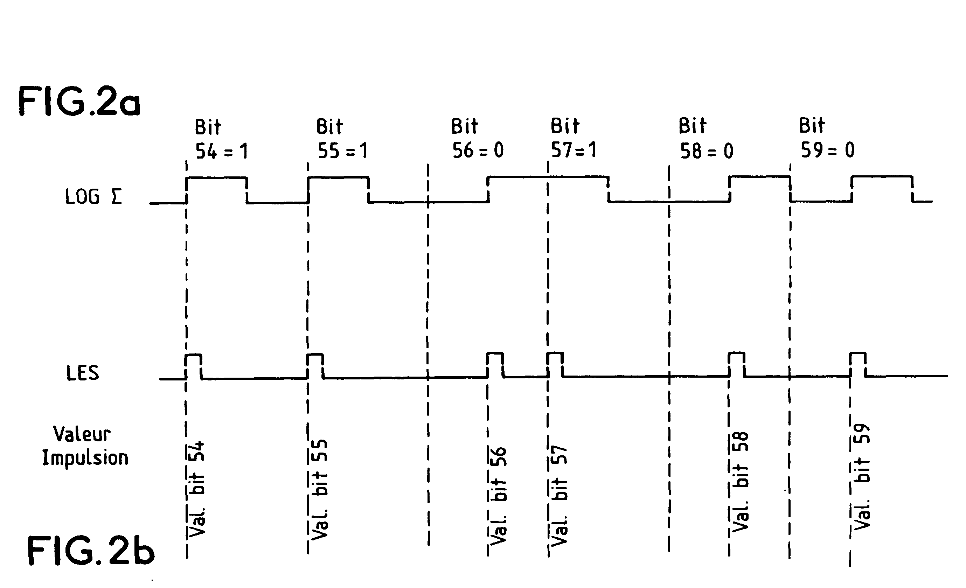

Les positions que peuvent prendre les fronts montants d'impulsions sont représentées figure 2, pour les impulsions 54 à 59, le front montant de l'impulsion est représenté par un signal d'une durée de 50 ns appelé LES.

La figure 2a, représente un exemple du signal de réponse pour les impulsions 54 à 59 et la figure 2b, représente la position des fronts montants d'impulsions de ce signal. Sur la figure 2a, les bits 54, 55, 57 ont la valeur 1, c'est à dire que l'impulsion représentant le bit est située en tête d'un intervalle de 1 µs. Les bits 56, 58, 59 sont des zéros, c'est à dire que l'impulsion représentant le bit est située à la fin d'un intervalle d'une µs. Les fronts montants d'impulsions correspondants sont situés en tête de l'intervalle d'une µs pour les bits 54, 55, et 57 et au milieu de cet intervalle de 1 µs pour les bits 56, 58 et 59.

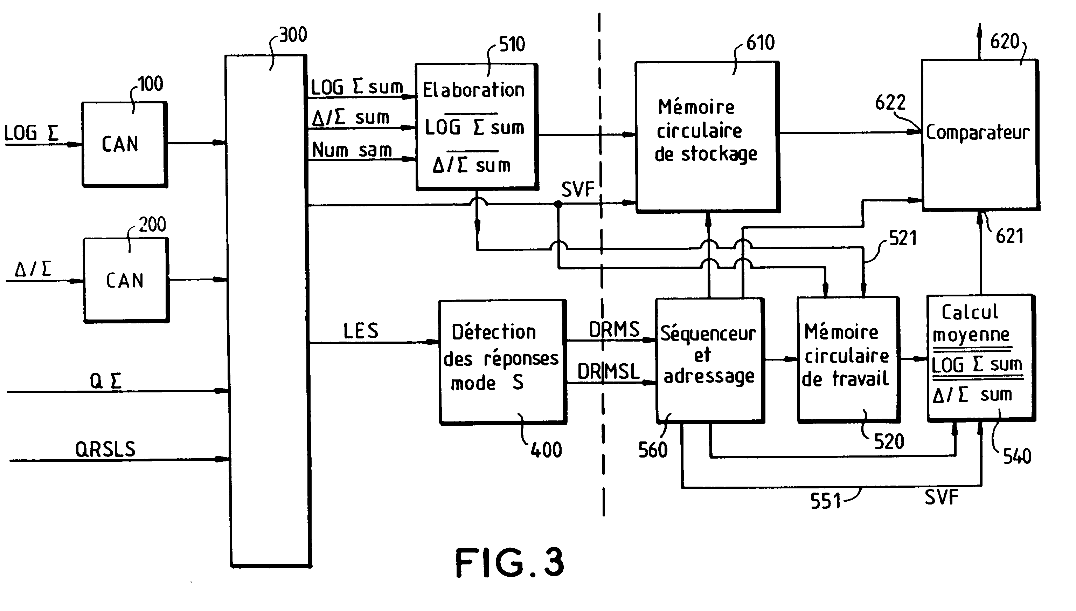

La figure 3 représente l'implantation de l'invention dans un extracteur de radar secondaire. L'invention se situe en aval de circuits connus en eux-mêmes qui élaborent de façon conventionnelle une information dite de façon conventionnelle "LOGΣ" qui représente le logarithme de l'amplitude du signal reçu, une information Δ/Σ qui représente l'écart angulaire entre l'axe radioélectrique de l'antenne radar au sol et la position de l'avion dans le lobe de l'antenne, et un signal QΣ qui est la recopie du signal LOGΣ diminué de six décibels de façon à avoir le point milieu de la valeur de la puissance de l'impulsion.

L'élaboration des signaux en provenance des voies dites somme et différence est connue en elle-même et n'est pas représentée dans la figure 3. Sur la figure 3, on voit des convertisseurs analogiques 100 et 200 recevant respectivement les informations LOGΣ et Δ/Σ.

Les informations ainsi numérisées sont introduites dans un dispositif 300 dit de traitement des impulsions qui reçoit également des informations numérisées sur QΣ et un signal QRSLS dit d'indication de réception sur lobes secondaires. Tous ces signaux sont connus en eux-mêmes et ne seront pas décrits.

Le dispositif 300 ne fait pas partie de l'invention. En conséquence, seules les fonctions de ce dispositif nécessaires à la compréhension du fonctionnement de l'invention seront données.

En ce qui concerne le fonctionnement de l'invention le dispositif 300 élabore la position des fronts montants des impulsions. Cette élaboration du front montant des impulsions est effectuée non seulement en tenant compte de la position de fronts montants réels apparaissant au-dessus d'un seuil de détection fixé mais encore en tenant compte de toutes les variations significatives du niveau de puissance détecté. Ces variations peuvent être révélatrices de "garbling" d'impulsions. Ce dispositif tient également compte de la durée des impulsions, d'une part pour éliminer de façon classique toutes les impulsions d'une durée inférieure à 0,3 µs, et d'autre part pour élaborer de façon artificielle des fronts montants d'impulsion, dit pseudo fronts montants. Ces pseudo fronts sont élaborés lorsque la longueur d'une impulsion réelle permet de supposer qu'au moins deux impulsions réponses ont contribué à créer le signal reçu. Deux types de pseudo fronts sont établis, d'une part des pseudo fronts S en supposant que l'impulsion reçue appartient à une réponse mode S et d'autre part des pseudo fronts de réponse ordinaire en supposant que l'impulsion reçue appartient à une réponse ordinaire. Toutes les impulsions détectées ainsi que les pseudo impulsions créées sont envoyées d'une part vers un dispositif de détection des réponses ordinaires non représenté et d'autre part vers un dispositif de détection des réponses mode S 400.

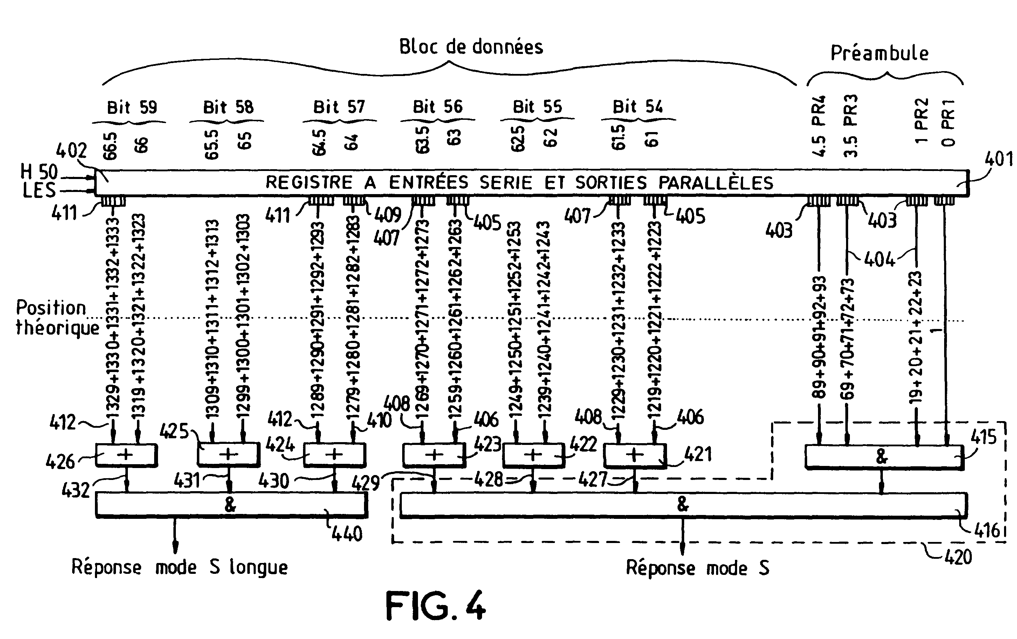

Le fonctionnement du dispositif de détection 400 sera maintenant explicité en référence à la figure 4. Cette détection est exécutée à la même fréquence que la fréquence d'échantillonnage utilisée pour la numérisation des informations LOGΣ et Δ/Σ par les convertisseurs analogique-numériques 100 et 200. Dans le cas de la réalisation cette fréquence est de 20 MHz. Cette fréquence de 20 MHz est fournie par une horloge non représentée. C'est le signal de cette horloge qui séquence toutes les opérations de traitement des signaux numériques fournis par le dispositif 300. Ainsi en ce qui concerne la détection des réponses mode S, elle est effectuée toutes les 50 ns. Compte tenu du mode de détection retenu pour l'élaboration du dispositif 400 et de la configuration d'une réponse mode S, la détection nécessite le stockage de tous les fronts montants d'impulsions pendant une période de 66,7 µs. A l'issue de cette période, il est possible de décider que d'une part on a reçu une réponse mode S et que d'autre part cette réponse est longue ou courte.

Pour effectuer cette détection, tous les signaux représentatif de la présence ou de l'absence de fronts montants d'impulsions sont introduits au pas de 50 ns dans un registre à décalage 401 à entrée série 402 et sorties parallèles, au pas de 50 ns ; le registre a 1333 cases numérotées de 1 à 1333. Compte tenu des tolérances et de l'incertitude liée à l'échantillonnage au pas de 50 ns, on admet que si la première impulsion du préambule occupe la case 1, la seconde située à 1 µs peut occuper les cases 19 à 23, la troisième les cases 69 à 73 et la quatrième les cases 89 à 93. Chaque groupe 403 de sorties parallèles correspondante est relié à une liaison série 404 qui débouche sur un premier ensemble 415 de portes "et" qui permet de vérifier la présence simultanée de quatre impulsions espacées comme un préambule de réponse mode S.

Pour vérifier la présence des trois dernières impulsions d'une réponse mode S courte, les groupes de sorties 405, 407 des cases 1219 à 1223 et 1229 à 1233, 1239 à 1243 et 1249 à 1253, 1259 à 1263 et 1269 à 1273 sont reliées à des liaisons séries 406, 408 qui alimentent un second ensemble de portes "et" 416 qui reçoit la sortie du premier ensemble 415. Un premier corrélateur 420 constitué des deux ensembles 415 et 416 permet donc de s'assurer de la présence simultanée des quatre impulsions du préambule et des trois dernières impulsions d'une réponse mode S courte. On remarque que pour les trois dernières impulsions de la réponse, en raison de la modulation de position, on a introduit avant l'entrée dans l'ensemble de portes "et" 416 trois additionneurs 421 à 423. Ainsi l''additionneur 421 reçoit sur l'une de ses entrées les sorties parallèles 405, série 406, correspondant au bit N° 54, si ce bit à la valeur 1, c'est-à-dire si le front montant de l'impulsion représentant le bit 54 se trouve à 61 µs de la première impulsion du préambule, soit, avec les tolérances, les sorties des cases 1219 à 1223. L'autre entrée reçoit les sorties parallèles 407, série 408 des portes 1224 à 1229 où doit se trouver le front montant de l'impulsion si le bit 54 a la valeur 0. De même les additionneurs 422 et 423 reçoivent les sorties (405, 407) correspondant aux impulsions 55 et 56.

Enfin un dernier ensemble de portes "et" 440 reçoit par l'intermédiaire d'additionneurs 424 à 426 les groupes de sorties 409, 411 des cases 1279 à 1283 et 1289 à 1293, 1299 à 1303 et 1309 à 1313, 1319 à 1323 et 1329 à 1333, du registre 401. Ces sorties correspondent aux premières impulsions d'une réponse mode S longue. Les additionneurs 422 à 426 ont le même rôle que les additionneurs 421 à 423, mais pour les bits 57 à 59 de la réponse mode S.

Le traitement suivant va consister à rechercher toutes les impulsions susceptibles d'appartenir à la réponse mode S qui vient d'être détectée. Cette recherche va être effectuée selon trois critères cumulatifs ; un critère de position dans le temps de l'impulsion par rapport à la position des impulsions constituant le préambule, un critère de puissance de l'impulsion par rapport à la puissance moyenne des impulsions de la réponse, un critère d'écartométrie de l'impulsion par rapport à la valeur moyenne d'écartométrie des impulsions de la réponse. Les valeurs moyennes de référence d'écartométrie et de puissance sont mesurées dans le cas de la réalisation sur la valeur moyenne des quatre impulsions formant le préambule de la réponse mode S détectée. La valeur moyenne d'une impulsion est obtenue en prenant la valeur moyenne des échantillons la constituant. Chaque impulsion répondant au critère temporel est alors comparée du point de vue de sa puissance et de son écartométrie aux valeurs moyennes de référence établies sur les quatre impulsions du préambule. Si les écarts constatés sont inférieurs à un seuil fixé à l'avance, l'impulsion est considérée comme faisant partie d'une réponse mode S.

La valeur du seuil relatif à la puissance est elle-même une fonction de la valeur moyenne des quatre impulsions servant de référence. Dans la réalisation selon l'invention la valeur du seuil est variable selon quatre paliers. La valeur des paliers et des seuils est programmable. Les seuils sont d'autant plus élevés que la valeur de la puissance moyenne de référence est faible.

Enfin le critère d'écartométrie n'est plus pris en compte lorsque la valeur de la puissance moyenne de référence est au dessous d'un seuil fixé.

La sélection des impulsions appartenant ou non à la réponse mode S détectée sera maintenant explicitée en revenant à la figure 3.

Il a été vu lors du début de la description de la figure 3 que le module 300 traitait les informations LOGΣ, Δ/Σ, QΣ et QRSLS pour détecter les fronts montants d'impulsions LE. Ce module élabore également un message d'impulsion. Ce message est renouvelé régulièrement à la cadence d'échantillonnage. Ce message comporte notamment sur des voies dédiées outre la grandeur dite LE qui indique la position d'un front montant d'impulsion lorsqu'il est à 1 ;

- une grandeur appelée LOGΣsum obtenue en faisant la somme de la valeur des échantillons LOGΣ successifs. Cette somme est remise à 0 chaque fois que LE passe à 1. Ainsi la somme précédemment obtenue était représentative de la somme de la valeur des échantillons LOGΣ attribués à l'impulsion précédente :
- une grandeur Δ/Σsum calculée de la même façon que LoGΣsum ;
- une grandeur dite SVF pouvant prendre la valeur 0 ou 1. Elle est à 1 s'il n'a pas été possible d'associer à un front montant d'impulsion détectée des échantillons permettant de calculer des valeurs pour LOGΣ et Δ/Σ ;
- une grandeur appelée numsam représentative du nombre d'échantillons ayant servi à établir les valeurs LoGΣsum ou Δ/Σsum.

Les grandeurs LoGΣsum, Δ/Σsum et numsam en sortie du module 300 sont introduites dans un module 510 qui associe à chaque LE la valeur de la puissance et de l'écartométrie de l'impulsion. Cette valeur est obtenue par division de LoGΣsum et Δ/Σsum par numsam. Il s'agit, on le voit de la valeur moyenne des échantillons représentatifs de l'impulsion en ce qui concerne la puissance et l'écartométrie. Ces valeurs sont alors stockées dans une mémoire circulaire 610 à la cadence d'échantillonnage. Les cases mémoires de la mémoire 610 contiennent donc chacune soit une information sous forme d'un mot de trois composantes représentant la valeur moyenne de LOGΣ, Δ/Σ, et SVF, soit aucune information. Les cases contenant une information ont entre elles les mêmes intervalles que les messages d'impulsions contenant une information LE à la valeur 1.

La fonction de cette mémoire circulaire est de retarder l'information relative à chaque impulsion pendant le temps nécessaire à la détection d'une réponse mode S, augmenté du temps nécessaire pour établir la valeur moyenne des grandeurs caractérisant les impulsions composant la réponse.

Cette dernière partie du traitement va être abordée ci-après. Ce traitement s'effectue sur des données relatives à chaque impulsion. Ces données sont stockées dans une mémoire circulaire 520.

L'adresse des données relatives à une impulsion de la mémoire circulaire 520 est une fonction du moment où le front montant LE de cette impulsion a été détecté. Les informations de la mémoire circulaire 520 sont stockées dans cette mémoire de la même façon que les informations de la mémoire 610. Cela signifie en particulier que les cases mémoires dont l'adresse correspond à un moment où le signal LE a la valeur 0 sont vides. La fonction de la mémoire circulaire 520 est de stocker les informations relatives à chaque impulsions pendant le temps nécessaire à la détection d'une réponse mode S. Ce temps de stockage est légèrement plus court que le temps de stockage de la mémoire 610. Les cases non vides de la mémoire 520 contiennent des informations sur les valeurs de puissance et d'écartométrie de chaque impulsion. Elles contiennent également une information sur un bit appelée SVF dont la signification a été donnée plus haut. Les informations sur l'écartométrie et la puissance proviennent du module 510. Le signal SVF est prélevé directement en sortie du module 300 (figure 3). Il sera vu plus tard que les informations des mémoires 610 et 520 alimentent des modules de calcul. Le stockage concernant essentiellement les mêmes informations avec un léger décalage dans le temps, on voit qu'il est tout à fait possible sans sortir du cadre de la présente invention de concevoir un autre arrangement de ces mémoires. Si cet arrangement a été choisi c'est uniquement pour des raisons de facilité et de sûreté d'adressage des cases mémoires comme expliqué ci-après. L'adressage des mémoires 520 et 610 est réalisé en séquence par un module 560.

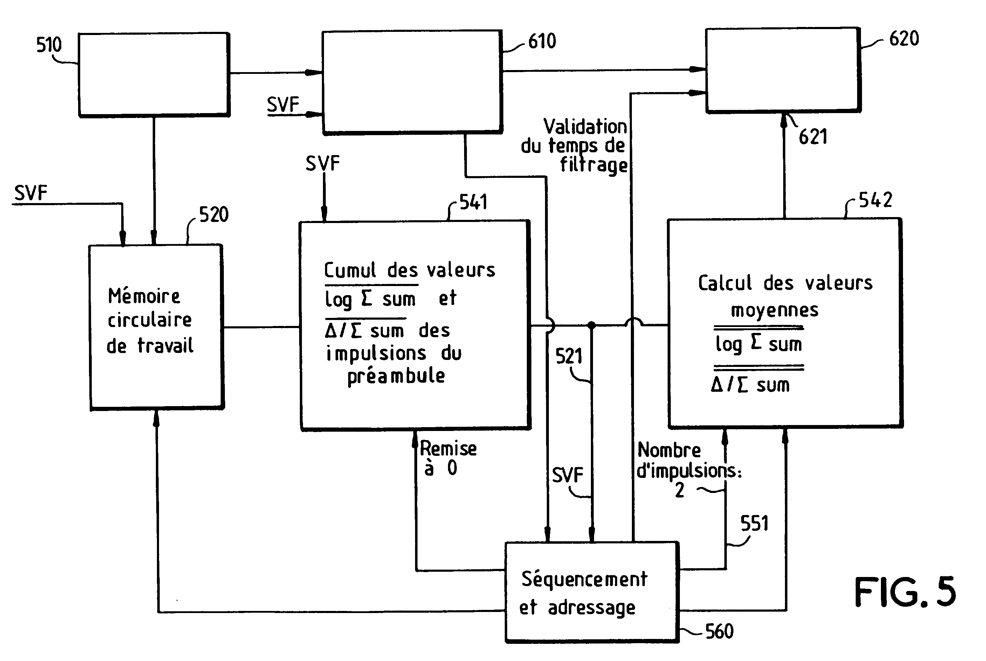

La fonction d'adressage est double. Il y a tout d'abord un premier adressage de stockage. Cet adressage comme expliqué plus haut est réalisé en séquence à la cadence d'échantillonnage, avec une incrémentation du numéro de l'adresse à chaque signal d'horloge. Cet adressage n'est pas représenté figure 5. Il y a une seconde fonction d'adressage consistant pour le traitement à rechercher les adresses d'impulsions qui de par leurs positions sont susceptibles d'appartenir à une réponse mode S. C'est cette seconde fonction qui est dévolue au module 560. Le module 560 est un séquenceur, il reçoit en provenance du module 400, à la cadence générale d'échantillonnage deux signaux sur un bit. L'un appelé de détection de réponse mode S (DRMS) est à 1 si une réponse mode S est détectée, l'autre appelé détection de réponse mode S longue (DRMSL) est à 1 si la réponse détectée est longue il est à 0 dans le cas contraire.

La réception de ces signaux déclenche la programmation du séquenceur 560. Si DRMS est à 1 et DRMSL à 0 le séquenceur est programmé pour 66 µs, si DRMS est à 1 et DRMSL à 1 également le séquenceur est programmé pour 122 µs. Au reçu du signal DRMS le dispositif de calcul d'adresse 560 calcule, à partir de l'adresse courante - la dernière adresse de stockage-les adresses possibles de chaque impulsion de la réponse détectée. Ces adresses résultent d'une part de leur position telle qu'elle est normalisée et d'autre part du décalage possible en raison des tolérances et de l'incertitude introduite par l'échantillonnage.

Chaque impulsion peut dans ces conditions avoir cinq adresses correspondant à cinq cases mémoires consécutives. Compte tenu de la manière d'effectuer la détection (voir plus haut) l'adresse de la première impulsion du préambule correspond à la case mémoire chargée 66,7 µs auparavant.

Pendant tout le temps que dure le traitement le séquenceur 560 compte les battements d'horloge de façon à pouvoir déterminer au moment où cela sera nécessaire l'adresse des impulsions de la réponse détectée à partir de l'adresse courante. Le problème d'adressage étant réglé le traitement par lui-même est relativement simple. Il consiste en un calcul de la valeur moyenne de référence des grandeurs LOGΣ et Δ/Σ établi sur les impulsions du préambule. Ce calcul est effectué dans un module 540 qui reçoit les valeurs de ces grandeurs en provenance des cases, adressées par le modules 560, de la mémoire 520.

Les valeurs moyennes de référence calculées par le module 540 sont introduites dans un module de comparaison 620 par une première série d'entrées 621. Une seconde série d'entrées 622 de ce module reçoit les valeurs $\overline{LOG\Sigma}$sum et $\overline{\Delta/\Sigma}$sum en provenance des cases mémoires de la mémoire 610. L'impulsion est considérée comme appartenant à la réponse mode S si les différences entre la valeur moyenne de référence de chaque grandeur et la valeur de l'impulsion courante sont inférieures à un seuil qui est programmé en fonction de la valeur de $\overline{LOG\Sigma}$sum. Lorsque $\overline{LOG\Sigma}$sum est inférieur à une valeur fixée la comparaison sur Δ/Σ n'est plus effectuée.

Le mode préféré de réalisation du module 540 sera maintenant décrit en référence à la figure 5.

Ce module est composé de deux modules 541 et 542.

Le module 541 effectue une simple addition des grandeurs $\overline{LOG\Sigma sum}$, $\overline{\Delta/\Sigma sum}$ des impulsions du préambule. Lorsque le signal SVF d'une impulsion est à 1, l'impulsion n'est pas prise en compte, le séquenceur 560 en est informé par une liaison 521. Cela permet de bloquer un compteur du séquenceur. L'information, le nombre d'impulsions comptées, est fournie au module 542 par une liaison 551 en prévenance du séquenceur 560.

Le module 542 reçoit, les sommes en sortie du module 541. Une division par le nombre d'impulsions permet d'obtenir une valeur moyenne de référence des grandeurs LOGΣsum et Δ/Σsum obtenues sur les impulsions du préambule affectées d'un signal SVF à 0.

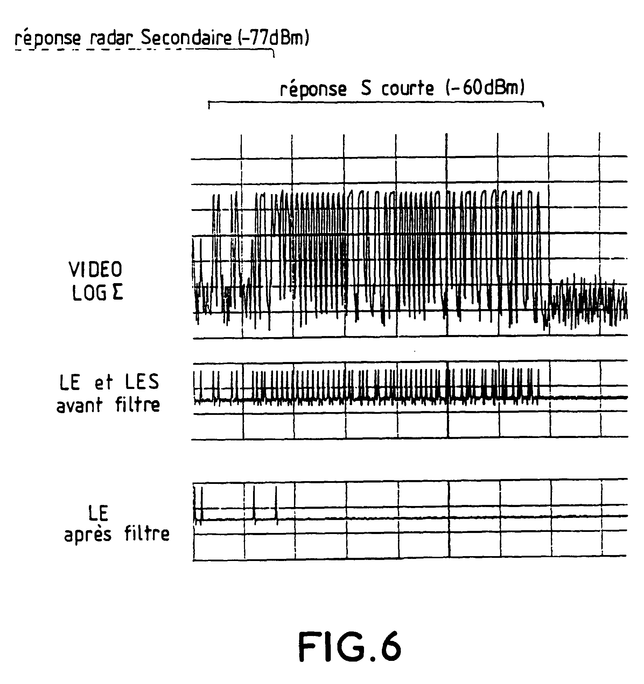

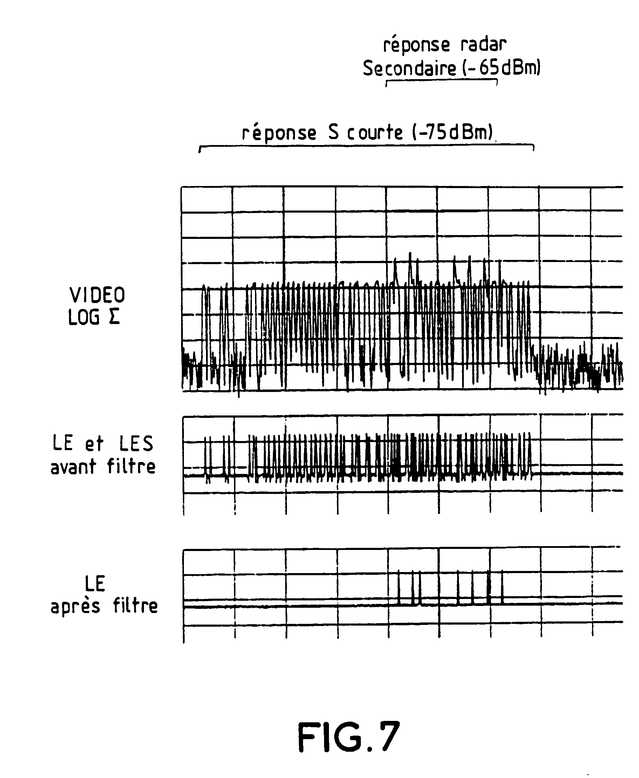

Les figures 6 et 7, illustrent chacune en trois phases les résultats obtenus par le filtrage. Sur la figure 6, la courbe du haut représente un signal vidéo LOGE dans lequel sont mélangées une réponse de radar secondaire à un niveau de puissance de - 77 dBm et une réponse S courte à un niveau de puissance de - 60 dBm. La courbe centrale représente les signaux LE avant filtrage par le dispositif selon l'invention. La courbe du bas représente les signaux LE de fronts montants de réponse de radars secondaires extraits par le traitement. La figure 7, représente ces mêmes trois phases mais pour une réponse de radar secondaire plus puissante (- 65 dBm) que la réponse S avec laquelle elle est mélangée (- 75 dBm). Ce fait se traduit sur la courbe vidéo LOGΣ par des pointes qui dépassent du niveau moyen de la courbe.

On constate que dans les deux cas le dispositif selon l'invention permet l'extraction des impulsions recherchées.

## Revendications

1. Procédé numérique de détection en temps réel de messages impulsionnels constitués selon une norme définissant les largeurs et positions relatives des différentes impulsions constituant le message, la norme statuant que le message peut être court, auquel cas il comporte un nombre (A+B) d'impulsions, ou long, auquel cas il comporte (A+B+C) impulsions, caractérisé en ce que :

   1) l'on mémorise en séquence selon une période p des signaux représentatifs de la présence ou de l'absence d'un front montant des diverses impulsions du message et ceci pendant un nombre de périodes p suffisant pour mémoriser au moins (A+B+1) impulsions du message, chaque front montant ayant à chaque instant une adresse dans une mémoire fonction de son instant d'arrivée ;
   2) on vérifie la présence simultanée dans la mémoire d'un premier groupe d'impulsions qui de par les écarts relatifs de temps de leurs adresses sont susceptibles d'appartenir aux (A+B) premières impulsions mémorisées, cette présence simultanée entraînant la production d'un premier signal ayant la valeur (1) en cas de présence et la valeur (0) en cas d'absence, et simultanément on vérifie la présence simultanée d'un second groupe d'impulsions qui de par les écarts relatifs de temps de leurs adresses sont susceptibles d'appartenir à des impulsions du message mémorisées après les (A+B) premières impulsions, cette présence entraînant la production d'un second signal ayant la valeur (1) en cas de présence et la valeur (0) en cas d'absence, le premier signal à (1) constituant une détection de message, le second signal à (0 ou 1) caractérisant un message court ou long.

**2.** Procédé selon la revendication 1, pour la détection d'un message dont la norme statue que les (A) premières impulsions dites de préambule ont des positions invariables les unes par rapport aux autres, caractérisé en ce que le premier groupe d'impulsions est constitué par les (A) premières impulsions et des dernières impulsions consécutives des (B) impulsions suivantes et que le second groupe d'impulsions est constitué par les premières impulsions consécutives suivant les (A+B) premières impulsions.

**3.** Procédé selon la revendication 2, pour la détection d'un message constitué par une réponse mode S de radar secondaire pour laquelle A=4, B=56 et C=56, caractérisé en ce que le premier groupe d'impulsions est constitué par les quatre impulsions du préambule et les impulsions (54, 55 et 56) du groupe B et en ce que le deuxième groupe est constitué des trois premières impulsions suivant la 56ème du groupe B.

**4.** Procédé numérique de reconnaissance d'impulsions susceptibles de par leurs positions temporelles d'appartenir à un message impulsionnel constitué selon une norme définissant les largeurs et positions relatives des différentes impulsions constituant le message, la norme statuant que le message peut être court auquel cas il comporte (A+B) impulsions ou long auquel cas il comporte (A+B+C) impulsions, procédé dans lequel:

a) on mémorise en séquence selon une période p, au moins une valeur de grandeurs $\alpha$ $\beta$ $\gamma$ mesurées préalablement sur chaque impulsion, chaque grandeur ayant à chaque instant une adresse dans une mémoire fonction de son instant d'arrivée ;

et caractérisé en ce que:

b) on détecte en séquence aux mêmes instants et selon la même période p la présence d'un message la détection du message étant réalisée pour intervenir par construction à un temps connu par rapport à la première impulsion du message détecté, chaque détection provoquant le passage à 1 d'un premier signal initialement à O et le passage à 1 d'un second signal initialement à O si la réponse est longue ;

c) au reçu d'une valeur 1 pour le premier signal et de la valeur du second signal on établit sur plusieurs valeurs des grandeurs $\alpha$ $\beta$ $\gamma$ respectivement, stockées dans la mémoire qui de par leurs adresses ont des positions relatives correspondant à des impulsions du préambule du message détecté à l'étape b, des valeurs moyennes de référence $\bar{\alpha}$ $\bar{\beta}$ $\bar{\gamma}$ des différentes

grandeurs ;

d) on détermine l'adresse de la valeur d'au moins une des grandeurs $\alpha$ $\beta$ $\gamma$ mesurées qui de par sa position par rapport au moment de la détection est l'adresse de la valeur $\alpha$ $\beta$ $\gamma$ de la première impulsion ;

e) on compare la valeur d'au moins une grandeur $\alpha$ $\beta$ $\gamma$ pour la première impulsion, à la valeur moyenne de référence $\bar{\alpha}$ $\bar{\beta}$ $\bar{\gamma}$ correspondante ;

f) on reconnaît la première impulsion comme appartenant au message si aucune des comparaisons ne fait apparaître un écart, entre une valeur mesurée de cette impulsion et la valeur moyenne de référence correspondante, supérieur à un seuil préalablement fixé pour chaque grandeur ;

g) on recommence les étapes d, e, f, pour chacune des impulsions suivantes qui de par leurs positions sont susceptibles d'appartenir à une réponse mode S, pendant le temps correspondant à un message court si le second signal à la valeur 0 et le temps d'un message long si le second signal à la valeur 1.

**5.** Procédé numérique selon la revendication 4, caractérisé en ce que le seuil de comparaison de l'une des grandeurs peut être une fonction de la valeur moyenne d'une autre grandeur.

**6.** Procédé numérique selon la revendication 4, caractérisé en ce que les grandeurs mesurées comportent une grandeur dite LOG$\Sigma$ représentative de la puissance du signal reçu et, une grandeur angulaire $\Delta/\Sigma$ représentative d'un écart de l'origine du signal reçu par rapport à une référence directionnelle.

**7.** Procédé selon l'une des revendications 4 à 6, caractérisé en ce que la détection est réalisée selon l'une des revendications 1 à 3.

**8.** Procédé selon l'une des revendications 4 à 7 dans lequel le message est constitué par une réponse mode S d'un radar secondaire.

**9.** Dispositif (400) de détection en temps réel des impulsions appartenant à un message hyperfréquence constitué selon une norme statuant que le message peut être de façon aléatoire court ou long et comporte :

- un préambule constitué d'un nombre A d'impulsions dont les largeurs et les positions relatives sont fixées ainsi que leurs tolérances d'écart par la norme ;
- un bloc de données constitué par des impulsions modulées en position dont les largeurs et les positions possibles compte tenu d'une modulation et des tolérances sont fixées par la norme, la norme statuant que chaque bloc de données peut être de façon aléatoire constitué de B impulsions auquel cas le message est dit court ou de (B+C) impulsions auquel cas le message est dit long le dispositif étant inclus dans un récepteur de signaux hyperfréquence muni de moyens (300) pour élaborer un signal numérique dit LE représentatif de la présence d'un front montant d'impulsion, de moyens pour élaborer d'autres grandeurs se rapportant aux signaux hyperfréquence reçus par le récepteur, et de moyens (100, 200) pour convertir ces grandeurs en signaux numériques, la numérisation étant effectuée par prise périodique d'échantillons de valeurs de ces grandeurs, la prise d'échantillons étant commandée par des signaux d'horloge de façon simultanée pour les signaux LE et pour les autres grandeurs et la période ayant la valeur p, le dispositif étant caractérisé en ce qu'il comprend un registre à décalage (401) à entrée (402) série et sorties parallèles comportant un nombre de cases non inférieur au nombre de périodes p séparant le front montant de la première impulsion du préambule et le front montant de la première impulsion des C impulsions caractérisant une réponse longue dans lequel les signaux en sortie des moyens (300) élaborant les signaux LE sont introduits en séquence sur commande des dits signaux d'horloge, et un premier et un second corrélateurs, et en ce que des premiers groupes (403) de sorties de cases consécutives de ce registre sont branchées en parallèle pour alimenter des liaisons séries (404) alimentant le premier corrélateur (420), des seconds groupes (405, 407) de sorties de cases consécutives de ce registre sont branchées en parallèle pour alimenter des liaisons séries (406, 408) qui alimentent elle-même des sommateurs (421, 422, 423) chaque sortie (427, 428, 429) de sommateur alimentant le premier corrélateur (420) et en ce que des troisièmes groupes (409, 411) de sorties de cases consécutives de ce registre sont branchées en parallèle pour alimenter des liaisons séries (410, 412) qui alimentent elles-mêmes des sommateurs (424, 425, 426) chaque sortie (430, 431, 432) de sommateur alimentant le second corrélateur (440) et en ce que les premier (420) et second (440) corrélateurs ne délivrent chacun un signal positif que sur présence d'un signal sur chacune de leurs alimentations.

10. Dispositif selon la revendication 9, caractérisé en ce que les premiers groupes de sorties (403) sont ceux des cases que peuvent occuper les A impulsions du préambule, que les seconds groupes de sorties (405, 407) sont ceux des cases que peuvent occuper les b dernières impulsions du groupe de B impulsions et que les troisièmes groupes de sorties (409, 411) sont ceux des cases correspondant aux c premières impulsions du groupe de C impulsions.

11. Dispositif selon la revendication 10, caractérisé en ce que les nombres b et c sont égaux à 3.

12. Utilisation du dispositif selon l'une des revendications 9 à 11 pour la détection de réponses mode S de radar secondaire, la norme de ces réponses étant définies par l'Organisation de l'Aviation Civile Internationale norme pour laquelle A=4, B=56 et C=56.

13. Dispositif de reconnaissance en temps réel des impulsions appartenant à un message hyperfréquence, constitué selon une norme statuant que le message peut être de façon aléatoire court ou long et comporte un préambule constitué d'un nombre A d'impulsions dont les largeurs et les positions relatives sont fixées ainsi que leurs tolérances d'écart par la norme, un bloc de données constitué par des impulsions modulées en position, dont les largeurs et les positions possibles compte-tenu d'une modulation et des tolérances sont fixées par la norme, la norme statuant que chaque bloc de données peut être de façon aléatoire constitué de B impulsions auquel cas le message est dit court ou de (B+C) impulsions auquel cas le message est dit long, le dispositif étant inclus dans un récepteur de signaux hyperfréquence muni de moyens (300) pour élaborer un signal numérique dit message d'impulsions, ce message étant établi à partir d'échantillons numériques prélevés selon une période P de grandeurs $\alpha$ $\beta$ $\gamma$ caractéristiques des signaux vidéo reçus par le récepteur, le message d'impulsions, comportant une information relative à la détection d'un front montant d'impulsions, dite LE, des informations dites sum représentatives de la somme des valeurs des échantillons de chaque grandeur $\alpha$ $\beta$ $\gamma$, affectés à l'impulsion représentée par LE, une information dite numsam relative au nombre d'échantillons de chaque grandeur affectés à l'impulsion, représentée par le front montant LE, le dispositif étant caractérisé en ce qu'il comporte un moyen de détection (400) d'arrivée du message, ce moyen recevant en séquence les informations LE et délivrant un signal MSR, si un message est détecté et un signal LMSR, si le message détecté est long, un moyen de calcul (510) de la valeur moyenne $\overline{sum}$ de chaque grandeur sum, ce moyen recevant les grandeurs sum et la grandeur numsam du message d'impulsion, une première mémoire (610) circulaire adressable de stockage, une seconde mémoire (520) circulaire adressable dite de travail chacune recevant en séquence les valeurs moyennes $\overline{sum}$

desdites grandeurs sum, l'adresse de chaque valeur étant à chaque instant une fonction de son instant d'arrivée dans la mémoire, un moyen de calcul d'adresses mémoire et de séquencement (560) qui au reçu des signaux MSR et LMSR détermine les adresses des dites valeurs $\overline{\overline{sum}}$, un moyen de calcul (540) d'une valeur moyenne de référence $\overline{\overline{sum}}$ de chaque grandeur sélectionnée pour les impulsions du préambule, alimenté en séquence par les dites valeurs sélectionnées à partir de la mémoire de travail (520), et un organe de comparaison (620) alimenté par ce moyen de calcul (540) via une première série d'entrées (621), et qui reçoit sur une seconde série d'entrées (622) et en séquence en provenance de la mémoire de stockage (610) et à partir de la fin du calcul des valeurs moyennes de référence $\overline{\overline{sum}}$, chacune des dites valeurs moyennes des grandeurs sélectionnées α β γ qui de par leurs adresses sont susceptibles d'appartenir à la réponse détectée, le dit organe de comparaison (620)/ retenant comme impulsion appartenant à la réponse détectée les impulsions pour lesquelles la différence entre une valeur moyenne de la grandeur mesurée sur cette impulsion et la valeur moyenne de référence correspondante est inférieure à un seuil prédéterminé pour chacune des grandeurs sélectionnées.

14. Dispositif selon la revendication 13 pour lequel le message d'impulsion comporte en outre une information dite SVF de validation des paramètres de chaque impulsion, cette information étant stockée dans la mémoire de travail (520) et la mémoire de stockage (610), caractérisé en ce que le moyen de calcul (540) des valeurs moyennes de référence comporte un dispositif de sommation (541) recevant de la mémoire circulaire de travail (520) les valeurs $\overline{LOG\Sigma sum}$ et $\overline{\Delta/\Sigma sum}$ des impulsions du préambule lorsque le signal SVF les valide et transmettant le signal SVF au moyen de calcul d'adresses et de séquencement (560), et un moyen diviseur (542) recevant le cumul des valeurs $\overline{LOG\Sigma sum}$ et $\overline{\Delta/\Sigma sum}$ établi par le dispositif de sommation (541), et le nombre d'impulsions ayant composé cette somme établi par le moyen de séquencement (560) à partir du signal SVF.

15. Dispositif selon l'une des revendications 13 ou 14, caractérisé en ce que le détecteur (400) est un dispositif de détection selon l'une des revendications 9 à 11.

16. Utilisation du dispositif selon l'une des revendications 13 à 15 dans un extracteur de radar secondaire pour le filtrage de réponse mode S les grandeurs caractérisant les signaux vidéo étant une grandeur représentative de la puissance de l'impulsion connue conventionnellement sous le nom de $LOG\Sigma$ et une grandeur représentative d'un écart angulaire connue sous le nom de $\Delta/\Sigma$.

**Patentansprüche**

1. Digitales Verfahren zur Echtzeiterfassung von Impulsnachrichten, die gemäß einer Norm gebildet werden, welche die Breite und relative Stellung der verschiedenen Impulse der Nachricht definiert, wobei die Norm angibt, daß die Nachricht kurz sein kann und dann (A+B) Impulse enthält, oder lang sein kann und dann (A+B+C) Impulse enthält, dadurch gekennzeichnet, daß

1) man nacheinander gemäß einer Periode p Signale speichert, die für das Vorliegen oder Nichtvorliegen einer Vorderflanke der verschiedenen Impulse der Nachricht repräsentativ sind, und zwar während einer ausreichend großen Anzahl von Perioden P, um mindestens (A+B+1) Impulse der Nachricht zu speichern, wobei jede Anstiegsflanke in jedem Augenblick eine vom Zeitpunkt des Auftretens abhängende Adresse in einem Speicher besitzt,
2) das gleichzeitige Vorliegen einer ersten Gruppe von Impulsen im Speicher, die aufgrund der relativen Zeitabstände ihrer Adressen den (A+B) ersten gespeicherten Impulsen zugehören können, wobei dieser Umstand zur Erzeugung eines ersten Signals mit dem Wert 1 im Fall des Vorliegens und dem Wert O im Fall des Nichtvorliegens führt, und das gleichzeitige Vorliegen einer zweiten Gruppe von Impulsen, die aufgrund der relativen Zeitabstände ihrer Adressen zu gespeicherten Impulsen der Nachricht hinter den (A+B) ersten Impulsen gehören können, werden überprüft, wobei dieser Umstand zur Erzeugung eines zweiten Signals mit dem Wert 1 im Fall des Vorliegens und eines Werts O im Fall des Nichtvorliegens führt, wobei der Wert 1 des ersten Signals eine Erfassung einer Nachricht und der Wert 0 oder 1 des zweiten Signals die Erfassung einer kurzen bzw. langen Nachricht kennzeichnet.

2. Verfahren nach Anspruch 1 für die Erfassung einer Nachricht, deren Norm bestimmt, daß die A ersten Impulse, Vorspann genannt, unveränderliche Abstände voneinander besitzen, dadurch gekennzeichnet, daß die erste Gruppe von Impulsen von den (A) ersten Impulsen und von aufeinanderfolgenden letzten Impulsen der (B) folgenden Impulse gebildet wird, und daß die zweite Gruppe von Impulsen aus den aufeinanderfolgenden ersten Impulsen im Anschluß an die (A+B) ersten Impulse gebildet wird.

**3.** Verfahren nach Anspruch 2 für die Erfassung einer Nachricht, die einer Antwort im Modus S einer Sekundärradaranlage gebildet wird, für die gilt A=4, B=56 und C=56, dadurch gekennzeichnet, daß die erste Gruppe von Impulsen durch die vier Impulse des Vorspanns und die Impulse (54, 55 und 56) der Gruppe B gebildet werden, und daß die zweite Gruppe von den drei ersten Impulsen nach dem 56ten Impuls der Gruppe B gebildet wird.

**4.** Digitales Verfahren zur Erkennung von Impulsen, die aufgrund ihrer zeitlichen Lage zu einer Impulsantwort gemäß einer Norm gehören können, die die Breite und relative Lage der verschiedenen Impulse der Nachricht definiert und die festlegt, daß die Nachricht kurz sein kann und dann (A+B) Impulse enthält, oder lang sein kann und dann (A+B+C) Impulse enthält, wobei dieses Verfahren folgenden Schritt enthält:

a) man speichert nacheinander gemäß einer Periode P mindestens einen Wert von Größen $\alpha$, $\beta$, $\gamma$, die vorher an jedem Impuls gemessen wurden, wobei jede Größe in einem Zeitpunkt eine vom Zeitpunkt des Eintreffens abhängige Adresse in einem Speicher besitzt,

dadurch gekennzeichnet, daß folgende weitere Verfahrensschritte vorgesehen sind:

b) man erfaßt nacheinander zu den gleichen Zeitpunkten und gemäß der gleichen Periode P das Vorliegen einer Nachricht, wobei diese Erfassung der Nachricht durch Konstruktion in einem bekannten Zeitpunkt bezüglich des ersten Impulses der erfaßten Nachricht erfolgt und jede Erfassung den Übergang eines ersten, ursprünglich den Wert 0 zeigenden Signals auf den Wert 1 und den Übergang eines zweiten, ursprünglich den Wert 0 zeigenden Signals auf den Wert 1 hervorruft, wenn die Antwort lang ist,

c) beim Empfang eines Werts 1 für das erste Signal und beim Empfang des Werts des zweiten Signals erstellt man über mehrere Werte der Größen $\alpha$, $\beta$, $\gamma$, die im Speicher enthalten sind und aufgrund ihrer Adressen Zeitlagen entsprechend den Impulsen des Vorspanns der im Schritt b erfaßten Nachricht besitzen, Bezugsmittelwerte $\overline{\alpha}$, $\overline{\beta}$ und $\overline{\gamma}$ der verschiedenen Größen,

d) man bestimmt die Adresse des Werts mindestens einer der gemessenen Größen $\alpha$, $\beta$, $\gamma$, die durch ihre Zeitlage bezüglich des Zeitpunkts der Erfassung die Adresse des Werts $\alpha$, $\beta$, $\gamma$ des ersten Impulses ist,

e) man vergleicht den Wert mindestens einer der Größen $\alpha$, $\beta$, $\gamma$ für den ersten Impuls mit dem entsprechenden Bezugsmittelwert $\overline{\alpha}$, $\overline{\beta}$, $\overline{\gamma}$,

f) man betrachtet den ersten Impuls als zur Nachricht gehörend, wenn keiner der Vergleiche eine Differenz zwischen dem gemessenen Wert dieses Impulses und dem mittleren entsprechenden Bezugswert oberhalb eines vorher für jede Größe festgelegten Schwellwerts ergibt,

g) man beginnt wieder die Verfahrensschritte d, e, f für jeden der nachfolgenden Impulse, die aufgrund ihrer Zeitlage zu einer Antwort im Modus S während der Zeit entsprechend einer kurzen Nachricht gehören können, wenn das zweite Signal den Wert 0 hat, bzw. während der Zeit einer langen Nachricht, wenn das zweite Signal den Wert 1 hat.

**5.** Digitales Verfahren nach Anspruch 4, dadurch gekennzeichnet, daß die Vergleichsschwelle einer der Größen von dem Mittelwert einer anderen Größe abhängen kann.

**6.** Digitales Verfahren nach Anspruch 4, dadurch gekennzeichnet, daß die gemessenen Größen eine Größe $LOG\Sigma$, die für die Leistung des empfangenen Signals repräsentativ ist, und eine Winkelabstandsgröße $\Delta/\Sigma$ enthalten, die für den Abstand des Ursprungs des empfangenen Signals bezüglich eines Richtungsbezugswerts repräsentativ ist.

**7.** Verfahren nach einem der Ansprüche 4 bis 6, dadurch gekennzeichnet, daß die Erfassung gemäß einem der Ansprüche 1 bis 3 erfolgt.

**8.** Verfahren nach einem der Ansprüche 4 bis 7, bei dem die Nachricht von einer Antwort im Modus S eines Sekundärradars gebildet wird.

**9.** Vorrichtung (400) zur Echtzeiterfassung der Impulse, die zu einer Funknachricht gehören, welche gemäß einer Norm gebildet wird, die festlegt, daß die Nachricht wahlweise kurz oder lang sein kann und aufweist:

- einen Vorspann mit einer Anzahl A von Impulsen, deren Breite und relative Zeitlage sowie ihre Abweichungstoleranzen durch die Norm festgelegt sind,
- einen Datenblock bestehend aus in ihrer Zeitlage modulierten Impulsen, deren mögliche Breite und Zeitlage unter Berücksichtigung einer Modulation und der Toleranzen durch die Norm festgelegt sind, wobei die Norm angibt, daß jeder Datenblock wahlweise aus B Impulsen bzw. aus (B+C) Impulsen besteht, so daß die Nachricht als kurz bzw. lang bezeichnet wird, wobei die Vorrichtung in einem Empfänger für Funksignale enthalten ist, der Mittel (300) zur Erarbeitung eines digitalen Signals LE, das für das Vorliegen einer Anstiegsflanke eines Impulses repräsentativ ist, Mittel zur Erarbeitung anderer Größen, die sich auf die vom Empfänger empfangenen Funksignale beziehen, und Mittel (100, 200) aufweist, um diese Größen in digitale Signale umzuwandeln, wobei die Digitalisierung durch periodische Tastung der Werte dieser Größen erfolgt und die Tastung durch Taktsignale simultan für die Signale LE und für die anderen Größen gesteuert wird, und wobei die Tastperiode den Wert P hat, dadurch gekennzeichnet, daß ein Schieberegister (401) mit einem Serieneingang (402) und parallelen Ausgängen und mit einer Anzahl von Registerstellen vorgesehen ist, die nicht kleiner als die Anzahl von Perioden zwischen der Anstiegsflanke des ersten Impulses des Vorspanns und der Anstiegsflanke des ersten Impulses der C eine lange Antwort charakterisierenden Impulse ist, wobei die Ausgangssignale der Mittel (300), die das Signal LE erzeugen, nacheinander unter Steuerung durch die Taktsignale in das Schieberegister eingespeist werden und wobei ein erster und ein zweiter Korrelator vorgesehen sind, und daß erste Gruppen (403) von Ausgängen aufeinanderfolgender Registerstellen parallel über Serienverbindungen (404) an den ersten Korrelator (420), zweite Gruppen (405, 407) von aufeinanderfolgenden Ausgängen von Registerstellen parallel über Serienverbindungen (406, 408) an Addierer (421, 422, 423) angeschlossen sind, wobei jeder Ausgang (427, 428, 429) eines Summierers den ersten Korrelator (420) speist, daß dritte Gruppen (409, 411) von Ausgängen aufeinanderfolgender Registerstellen parallel über Serienverbindungen (410, 412) Addierer (424, 425, 426) speisen und jeder Ausgang (430, 431, 432) der Addierer den zweiten Korrelator (440) speist, und daß die beiden Korrelatoren (420 und 440) ein positives Signal nur ausgeben, wenn ein Signal an jedem ihrer Eingänge vorliegt.

10. Vorrichtung nach Anspruch 9, dadurch gekennzeichnet, daß die ersten Ausgangsgruppen (403) diejenigen der Registerstellen sind, die die A Impulse des Vorspanns einnehmen können, daß die zweiten Gruppen von Ausgängen (405, 407) diejenigen Registerstellen sind, die die b letzten Impulse der Gruppe von B Impulsen einnehmen können, und daß die dritten Gruppen von Ausgängen (409, 411) diejenigen Registerstellen sind, die den c ersten Impulsen der Gruppe von C Impulsen entsprechen.

11. Vorrichtung nach Anspruch 10, dadurch gekennzeichnet, daß die Zahlen b und c den Wert 3 haben.

12. Verwendung der Vorrichtung nach einem der Ansprüche 9 bis 11 für die Erfassung von Antworten im Modus S in einer Sekundärradaranlage, wobei die Norm dieser Antworten durch die Organisation de l'Aviation Civile Internationale wie folgt festgelegt ist: A=4, B=56, C=56.

13. Vorrichtung zur Echtzeiterfassung der zu einer Funknachricht gehörenden Impulse, die gemäß einer Norm gebildet wird, die festlegt, daß die Nachricht wahlweise kurz oder lang sein kann und einen Vorspann mit A Impulsen, deren Breite und relative Zeitlage sowie ihre Abweichungstoleranzen durch die Norm festgelegt sind, und einen Datenblock enthält, der aus lagenmodulierten Impulsen gebildet wird, deren Breite und mögliche Zeitlage unter Berücksichtigung einer Modulation und der Toleranzen durch die Norm festgelegt sind, wobei die Norm festlegt, daß jeder Datenblock wahlweise aus B Impulsen besteht und dann eine kurze Nachricht ist, oder aus (B+C) Impulsen besteht und dann eine lange Nachricht ist, wobei die Vorrichtung in einem Empfänger von Funksignalen enthalten ist, der Mittel (30) zur Ermittlung eines digitalen Signals enthält, das Impulsnachricht genannt wird und ausgehend von in einer Periode P aus Größen $\alpha$, $\beta$, $\gamma$, die für vom Empfänger empfangene Videosignale charakteristisch sind, entnommenen digitalen Tastproben erstellt wird und eine Information bezüglich der Erfassung einer ansteigenden Flanke LE, Informationen sum, die für die Summe der Werte der Tastproben jeder dem durch LE repräsentierten Impuls zugeordneten Größe charakteristisch sind, und eine Information Numsam bezüglich der Anzahl der Tastproben jeder dem durch die Anstiegsflanke LE repräsentierten Impuls zugewiesenen Größe enthält,
dadurch gekennzeichnet, daß die Vorrichtung ein Mittel (400) zur Erfassung des Eintreffens der Nachricht enthält, das nacheinander die Informationen LE empfängt und ein Signal MSR liefert, wenn eine Nachricht erfaßt wurde, bzw,. ein Signal LMSR, wenn das erfaßte Signal ein langes Signal ist, weiter ein Rechenmittel (510) zur Berechnung des Mittelwerts $\overline{\text{sum}}$ jeder Größe sum, das die Größen sum und die Größe Numsam der Impulsnachricht empfängt, einen ersten adressierbaren Umlaufspeicher (610), einen zweiten adressierbaren Umlaufspeicher (520) als Arbeitsspeicher, wobei diese beiden Speicher nacheinander die Mittelwerte $\overline{\text{sum}}$ der Größen sum empfangen, wobei die Adresse jedes Werts in jedem Augenblick vom Zeitpunkt des Eintreffens im Speicher abhängt, ein Rechenmittel für die Speicheradressen und für die Folgesteuerung (560), das beim Empfang der Signal MSR und LMSR die Adressen der Werte $\overline{\text{sum}}$ bestimmt, ein Rechenmittel (540) für den Bezugsmittelwert $\overline{\overline{\text{sum}}}$ jeder ausgewählten Größe für die Impulse des Vorspanns, das nacheinander von den ausgewählten Werten aus dem Arbeitsspeicher (520) gespeist wird, und ein Vergleichsorgan (620), das von diesem Rechenmittel (540) über eine erste Serie von Eingängen (621) gespeist wird und an einer zweiten Serie von Eingängen (622) sowie nacheinander vom ersten Umlaufspeicher (610) und ausgehend vom Ende der Berechnung der Bezugsmittelwerte $\overline{sum}$ jeden der Mittelwerte der ausgewählten Größen α, β, γ empfängt, die aufgrund ihrer Adressen zur erfaßten Antwort gehören können, wobei das Vergleichsorgan (620) als zur erfaßten Antwort gehörende Impulse diejenigen auswählt, für die die Differenz zwischen einem Mittelwert der gemessenen Größe für diesen Impuls und dem entsprechenden Bezugsmittelwert unter einem vorgegebenen Schwellwert für jede der ausgewählten Größen liegt.

14. Vorrichtung nach Anspruch 13, für die die Impulsnachricht außerdem eine Information SVF zur Bestätigung der Parameter jedes Impulses enthält, wobei diese Information im Arbeitsspeicher (520) und dem ersten Speicher (610) gespeichert ist, dadurch gekennzeichnet, daß die Rechenmittel (540) für die Bezugsmittelwerte eine Kumulierungsvorrichtung (541) enthalten, die vom Arbeitsspeicher (520) die Werte $\overline{LOG\Sigma sum}$ und $\overline{\Delta/\Sigma sum}$ der Impulse des Vorspanns empfängt, wenn das Signal SVF sie bestätigt, und das Signal SVF an das Mittel zur Adressenberechnung und zur Folgesteuerung (560) übermittelt, sowie ein Divisionsmittel (542) enthält, das die kumulierte Summe der Werte $\overline{LOG\Sigma sum}$ und $\overline{\Delta/\Sigma sum}$, die von der Kumulierungsvorrichtung ermittelt wurden, sowie die Anzahl von Impulsen empfängt, die zu dieser von den Mitteln zur Folgesteuerung (560) aufgrund des Signals SVF ermittelten Summe beigetragen haben.

15. Vorrichtung nach einem der Ansprüche 13 oder 14, dadurch gekennzeichnet, daß die Erfassungsvorrichtung (400) eine Vorrichtung zur Erfassung gemäß einem der Ansprüche 9 bis 11 ist.

16. Verwendung der Vorrichtung nach einem der Ansprüche 13 bis 15 in einem Sekundärradarextraktor zum Ausfiltern einer Antwort im Modus S, wobei die die Videosignale charakterisierenden Größen eine für die Leistung der Impulse repräsentative und unter dem Namen LOGΣ bekannte und eine für den Winkelabstand repräsentative und unter dem Namen Δ/Σ bekannte Größe sind.

**Claims**

1. Digital method of real-time detection of pulsed messages constructed according to a standard defining the widths and relative positions of the various pulses making up the message, the standard stipulating that the message may be short, in which case it includes a number (A+B) of pulses, or long, in which case it includes (A+B+C) pulses, characterized in that:

1) signals representative of the presence or absence of a leading edge of the various pulses of the message are stored in sequence according to a period p for a number of periods p sufficient to store at least (A+B+1) pulses of the message, each leading edge having at each instant an address in a memory dependent on its instant of arrival;
2) the simultaneous presence in the memory is checked of a first group of pulses which by virtue of the relative time offsets of their addresses are liable to belong to the first (A+B) pulses stored, this simultaneous presence prompting the production of a first signal having the value (1) in the event of presence and the value (0) in the event of absence, and the simultaneous presence is simultaneously checked of a second group of pulses which by virtue of the relative time offsets of their addresses are liable to belong to message pulses stored after the first (A+B) pulses, this presence prompting the production of a second signal having the value (1) in the event of presence and the value (0) in the event of absence, the first signal with value (1) constituting a message detection, the second signal with value (0 or 1) characterizing a short or long message.

2. Method according to Claim 1, for the detection of a message whose standard stipulates that the first (A) so-called preamble pulses have invariable positions with respect to each other, characterized in that the first group of pulses consists of the first (A) pulses and of the last consecutive pulses of the (B) succeeding pulses and that the second group of pulses consists of the first consecutive pulses following the first (A+B) pulses.

3. Method according to Claim 2, for the detection of a message consisting of a secondary radar mode S response for which A=4, B=56 and C=56, characterized in that the first group of pulses consists of the four pulses of the preamble and pulses (54, 55 and 56) of group B and in that the second group consists of the first three pulses following the 56th of group B.

4. Digital method of recognizing pulses liable by virtue of their temporal positions to belong to a pulsed message constructed according to a standard defining the widths and relative positions of the various pulses making up the message, the standard stipulating that the message may be short in which case it includes (A+B) pulses or long in which case it includes (A+B+C) pulses, a method in which:

a) at least one value of magnitudes $\alpha \beta \gamma$ which are measured previously over each pulse is stored in sequence according to a period p, each magnitude having at each instant an address in a memory dependent on its instant of arrival;
and characterized in that:

b) the presence of a message is detected in sequence at the same instants and according to the same period p, the detection of the message being carried out so as to intervene by construction at a known time with respect to the first pulse of the detected message, each detection causing a first signal initially at 0 to pass to 1 and a second signal initially at 0 to pass to 1 if the response is long;

c) on receipt of a value 1 for the first signal and of the value of the second signal, mean reference values $\bar{\alpha} \, \bar{\beta} \, \bar{\gamma}$ of the various magnitudes are compiled over several values of the magnitudes $\alpha \beta \gamma$ respectively, stored in the memory which by virtue of their addresses have relative positions corresponding to pulses of the preamble of the message detected in step b;

d) the address is determined of the value of at least one of the measured magnitudes $\alpha \beta \gamma$ which by virtue of its position with respect to the moment of detection is the address of the value $\alpha \beta \gamma$ of the first pulse;

e) the value of at least one magnitude $\alpha \beta \gamma$ is compared for the first pulse with the corresponding mean reference value $\bar{\alpha} \, \bar{\beta} \, \bar{\gamma}$;

f) the first pulse is recognized as belonging to the message if none of the comparisons reveals an offset, between a measured value of this pulse and the corresponding mean reference value, greater than a threshold fixed previously for each magnitude;

g) steps d, e, f are repeated for each of the succeeding pulses which by virtue of their positions are liable to belong to a mode S response, for the time corresponding to a short message if the second signal has the value 0 and the time of a long message if the second signal has the value 1.

5. Digital method according to Claim 4, characterized in that the comparison threshold of one of the magnitudes may be a function of the mean value of another magnitude.

6. Digital method according to Claim 4, characterized in that the measured magnitudes include a magnitude termed LOG$\Sigma$ representative of the power of the signal received and, an angular magnitude $\Delta/\Sigma$ representative of an offset of the origin of the signal received with respect to a directional reference.

7. Method according to one of Claims 4 to 6, characterized in that the detection is carried out according to one of Claims 1 to 3.

8. Method according to one of Claims 4 to 7 in which the message consists of a mode S response of a secondary radar.

9. Device (400) for the real-time detection of pulses belonging to a very high frequency message constructed according to a standard stipulating that the message can be randomly short or long and includes:

- a preamble consisting of a number A of pulses whose widths and relative positions are fixed as are their offset tolerances by the standard;
- a data block consisting of position-modulated pulses whose widths and possible positions having regard to a modulation and tolerances are fixed by the standard, the standard stipulating that each data block can randomly consist of B pulses in which case the message is termed short or of (B+C) pulses in which case the message is termed long the device being encompassed within a very high frequency signal receiver furnished with means (300) for formulating a digital signal termed LE representative of the presence of a pulse leading edge, means for formulating other magnitudes relating to the very high frequency signals received by the receiver, and means (100, 200) for converting these magnitudes into digital signals, digitization being performed by periodically taking samples of values of these magnitudes, the taking of samples being controlled by clock signals simultaneously for the signals LE and for the other magnitudes and the period having the value p, the device being characterized in that it comprises a shift register (401) with serial input (402) and parallel outputs including a number of buckets which is not less than the number of periods p separating the leading edge of the first pulse of the preamble and the leading edge of the first pulse of the C pulses characterizing a long response in which the signals output by the means (300) formulating the signals LE are introduced in sequence on command of the so-called clock signals, and a first and a second correlator and in that first groups (403) of outputs of consecutive buckets of this register are connected in parallel so as to feed serial links (404) feeding the first correlator (420), second groups (405, 407) of outputs of consecutive buckets of this register are connected in parallel so as to feed serial links (406, 408) which themselves feed summators (421, 422, 423) each summator output (427, 428, 429) feeding the first correlator (420) and in that third groups (409, 411) of outputs of consecutive buckets of this register are connected in parallel so as to feed serial links (410, 412) which themselves feed summators (424, 425, 426) each summator output (430, 431, 432) feeding the second correlator (440) and in that the first (420) and second (440) correlators each deliver a positive signal only in the presence of a signal on each of their feeds.

10. Device according to Claim 9, characterized in that the first groups of outputs (403) are those of the buckets which the A pulses of the preamble may occupy, that the second groups of outputs (405, 407) are those of the buckets which the last b pulses of the group of B pulses may occupy and that the third groups of outputs (409, 411) are those of the buckets corresponding to the first c pulses of the group of C pulses.

11. Device according to Claim 10, characterized in that the numbers b and c are equal to 3.

12. Use of the device according to one of Claims 9 to 11 for the detection of secondary radar mode S responses, the standard for these responses being defined by the International Civil Aviation Organization, a standard for which A=4, B=56 and C=56.

13. Device for the real-time recognition of the pulses belonging to a very high frequency message constructed according to a standard stipulating that the message may be randomly short or long and includes a preamble consisting of a number A of pulses whose widths and relative positions are fixed as are their offset tolerances by the standard, a data block consisting of position-modulated pulses whose widths and possible positions having regard to a modulation and tolerances are fixed by the standard, the standard stipulating that each data block can randomly consist of B pulses in which case the message is termed short or of (B+C) pulses in which case the message is termed long, the device being encompassed within a very high frequency signal receiver furnished with means (300) for formulating a digital signal termed the pulse message, this message being compiled from digital samples withdrawn according to a period P of magnitudes $\alpha$ $\beta$ $\gamma$ characteristic of the video signals received by the receiver, the pulse message, including an information item relating to the detection of a leading edge of pulses, termed LE, information items termed sum representative of the sum of the values of the samples of each magnitude $\alpha$, $\beta$, $\gamma$, assigned to the pulse represented by LE, an information item termed numsam relating to the number of samples of each magnitude which are assigned to the pulse, represented by the leading edge LE, the device being characterized in that it includes a means (400) of detecting arrival of the message, this means receiving in sequence the information items LE and delivering a signal MSR if a message is detected and a signal LMSR, if the message detected is long, a means (510) of calculating the mean value $\overline{sum}$ of each sum, this means receiving the magnitudes sum and the magnitude numsam of the pulse message, a first addressable circular storage memory (610), a second addressable circular so-called work memory (520) each receiving in sequence the mean values $\overline{sum}$ of the said magnitudes sum, the address of each value being at each instant a function of its instant of arrival in the memory, a memory address calculation and sequencing means (560) which on receipt of the signals MSR and LMSR determines the addresses of the said values $\overline{sum}$, a means (540) of calculating a mean reference value $\overline{\overline{sum}}$ of each selected magnitude for the pulses of the preamble, fed in sequence with the said values selected from the work memory (520), and a comparison facility (620) fed by this calculating means (540) via a first series of inputs (621), and which receives on a second series of inputs (622) and in sequence coming from the storage memory (610) and starting from the end of the calculation of the mean reference values $\overline{\overline{sum}}$, each of the said mean values of the selected magnitudes $\alpha$ $\beta$ $\gamma$ which by virtue of their addresses are liable to belong to the detected response, the said comparison facility (620) retaining as pulse belonging to the detected response those pulses for which the difference between a mean value of the quantity measured over this pulse and the corresponding mean reference value is less than a predetermined threshold for each of the selected magnitudes.

14. Device according to Claim 13 for which the pulse message furthermore includes an information item termed SVF for validating the parameters of each pulse, this information item being stored in the work memory (520) and the storage memory (610), characterized in that the means (540) for calculating the mean reference values includes a summation device (541) receiving from the circular work memory (520) the values $\overline{LOG\Sigma sum}$ and $\overline{\Delta/\Sigma sum}$ of the pulses of the preamble when the signal SVF validates them and transmitting the signal SVF to the address calculation and sequencing means (560), and a divider means (542) receiving the aggregate of the values $\overline{LOG\Sigma sum}$ and $\overline{\Delta/\Sigma sum}$, compiled by the summation device (541), and the number of pulses which made up this sum, compiled by the sequencing means (560) from the signal SVF.

15. Device according to one of Claims 13 or 14, characterized in that the detector (400) is a detection device according to one of Claims 9 to 11.

16. Use of the device according to one of Claims 13 to 15 in a secondary radar extractor for mode S response filtering, the magnitudes characterizing the video signals being a magnitude representative of the power of the pulse conventionally known by the name LOG$\Sigma$ and a magnitude representative of an angular offset known by the name $\Delta/\Sigma$.

## FIG.1a

préambule  8.0 μs ± 0,05

bloc de données    112 μs — réponse longue

bloc de données    56 μs — réponse courte

## FIG.1b

Bit    Bit    Bit
1  2  3    4    5    53  54  55  56  57  58  59  60  61    111 112

0,5  μs ± 0,05
1  μs ± 0,05
3,5 μs  ± 0,05
8 μs ± 0,05

## FIG.1c

0  0  1  0  0    0  0  1  0  1  0  0  1  1    1  1

EP 0 577 480 B1

# FIG.2a

| | Bit 54 = 1 | Bit 55 = 1 | Bit 56 = 0 | Bit 57 = 1 | Bit 58 = 0 | Bit 59 = 0 |

LOG Σ

LES

Valeur Impulsion

Val. bit 54    Val. bit 55    Val. bit 56    Val. bit 57    Val. bit 58    Val. bit 59

# FIG.2b

EP 0 577 480 B1

FIG.3

LOG Σ → CAN (100)

Δ/Σ → CAN (200)

Q Σ

QRSLS

300

LOG Σ sum
Δ/Σ sum
Num sam

Elaboration (510)
$\dfrac{\overline{LOG\ \Sigma\ sum}}{\overline{\Delta/\Sigma\ sum}}$

SVF

Mémoire circulaire de stockage (610)

Comparateur (620)

622

621

LES

Détection des réponses mode S (400)

DRMS

DRMSL

Séquenceur et adressage (560)

Mémoire circulaire de travail (520)

521

Calcul moyenne (540)
$\dfrac{\overline{LOG\ \Sigma\ sum}}{\Delta/\Sigma\ sum}$

551

SVF

EP 0 577 480 B1

Bloc de données        Préambule

| Bit 59 | Bit 58 | Bit 57 | Bit 56 | Bit 55 | Bit 54 | | |

66.5 66   65.5 65   64.5 64   63.5 63   62.5 62   61.5 61    4.5 PR4   3.5 PR3   1 PR2   0 PR1

402

H 50 →
LES →

REGISTRE A ENTRÉES SERIE ET SORTIES PARALLÈLES    401

411     411   409 407   405   407   405   403   403   404

Position théorique

1329+1330+1331+1332+1333   1319+1320+1321+1322+1323
1309+1310+1311+1312+1313   1299+1300+1301+1302+1303
1289+1290+1291+1292+1293   1279+1280+1281+1282+1283
1269+1270+1271+1272+1273   1259+1260+1261+1262+1263
1249+1250+1251+1252+1253   1239+1240+1241+1242+1243
1229+1230+1231+1232+1233   1219+1220+1221+1222+1223
89+90+91+92+93   69+70+71+72+73   19+20+21+22+23   1

412   425   412   410 408   406   408   406   415

426 [+]   [+]   424 [+]   423 [+]   422 [+]   421 [+]   [&]

432   431   430   429   428   427

[&] 440      [&]   416

420

Réponse mode S longue        Réponse mode S

FIG. 4

EP 0 577 480 B1

22

FIG. 5

EP 0 577 480 B1

réponse radar Secondaire (-77dBm)

réponse S courte (-60dBm)

VIDEO
LOG Σ

LE et LES
avant filtre

LE
après filtre

# FIG.6

réponse radar
Secondaire (- 65 dBm)

réponse S courte (-75 dBm)

VIDEO
LOG Σ

LE et LES
avant filtre

LE
après filtre

# FIG.7